Europäisches Patentamt

European Patent Office

Office européen des brevets

(11) Veröffentlichungsnummer: **0 374 581 A1**

(12) **EUROPÄISCHE PATENTANMELDUNG**

(21) Anmeldenummer: 89122429.7

(22) Anmeldetag: 05.12.89

(51) Int. Cl.⁵: **B65G 47/61, B65G 19/02, A22B 7/00**

(30) Priorität: 14.12.88 DE 3842082

(43) Veröffentlichungstag der Anmeldung:
27.06.90 Patentblatt 90/26

(84) Benannte Vertragsstaaten:
**AT BE CH DE ES FR GB GR IT LI LU NL SE**

(71) Anmelder: **HERMANN WIEGAND GMBH**
**Am Anger 27**
**D-6419 Rasdorf(DE)**

(72) Erfinder: **Sohmen, Alfred**
**Rangstrasse 67**
**D-6400 Fulda(DE)**

(74) Vertreter: **Spalthoff, Adolf, Dipl.-Ing.**
**Pelmanstrasse 31 Postfach 34 02 20**
**D-4300 Essen 1(DE)**

(54) **Vorrichtung zur selbsttätigen Übergabe von mit geknoteten Aufhängeschlaufen versehenen Bearbeitungsstücken auf eine Transporteinrichtung.**

(57) Die Erfindung betrifft eine Vorrichtung zur selbsttätigen Übergabe von in einer Schlaufenmaschine mit einem feststehenden Auflagetisch mit geknoteten Aufhängeschlaufen versehenen Bearbeitungsstücken, vorzugsweise Fleischstücken, mit ihren Aufhängeschlaufen auf die Haken einer endlos umlaufenden Transporteinrichtung. Um eine derartige Vorrichtung zu schaffen, welche in einfacher und schneller Weise eine selbsttätige Übergabe von mit geknoteten Aufhängeschlaufen versehenen Bearbeitungsstücken auf die Haken einer Transporteinrichtung völlig gefahrlos ermöglicht, wird erfindungsgemäß vorgeschlagen, daß der Schlaufenmaschine (2) benachbart ein Drehkreuz (4) od.dgl. zugeordnet ist, daß die Schlaufenmaschine (2) mit einem Schlaufenführungsstab (5) mit Drehkreuz (4) od.dgl. in loser Verbindung steht, daß der Schlaufenführungsstab (5) sich vom Einstichbereich der Fadeneinziehnadel (6) der Schlaufenmaschine (2) bis in den Endbereich des in der Übergabeposition jeweils vorstehenden Armes (7) des Drehkreuzes (4) od.dgl. oberhalb desselben erstreckt, daß dem Mittenbereich des Drehkreuzes (4) od.dgl. das eine Ende eines schräg aufwärts gerichteten Abschnittes (10) einer mit Haken (11) ausgerüsteten, endlos umlaufenden Fördereinrichtung (12) zugeordnet ist, dessen anderes Ende mit der Transporteinrichtung (13) in Übergabeverbindung steht und daß der schräg aufwärts gerichtete Abschnitt (10) der Fördereinrichtung (12) in Längsrichtung des sich jeweils in der Abgabeposition befindlichen Armes (7) des Drehkreuzes (4) od.dgl. verläuft.

Fig. 1

## Vorrichtung zur selbsttätigen Übergabe von mit geknoteten Aufhängeschlaufen versehenen Bearbeitungsstücken auf eine Transporteinrichtung

Die Erfindung betrifft eine Vorrichtung zur selbsttätigen Übergabe von in einer Schlaufenmaschine mit einem feststehenden Auflagetisch mit geknoteten Aufhängeschlaufen versehenen Bearbeitungsstücken, vorzugsweise Fleischstücken, mit ihren Aufhängeschlaufen auf die Haken einer endlos umlaufenden Transporteinrichtung.

Es sind sogenannte Schlaufenmaschinen bekannt, mit denen Fäden in Bearbeitungsstücke, vorzugsweise Fleischstücke, eingebracht werden. Zu diesem Zwecke weisen die Schlaufenmaschinen Fadeneinzieheinrichtungen mit schwenkbaren, die Bearbeitungsstücke durchdringenden, gebogenen Hohlnadeln mit Fadenholern auf und zur Bildung von mit Knoten versehenen Aufhängeschlaufen, aus den in die Bearbeitungsstücke eingebrachten Fäden, sogenannte Knüpfeinrichtungen, deren Knüpfer den Hohlnadeln der Fadeneinzieheinrichtungen zugeordnet sind, wobei die Bewegungsabläufe der Hohlnadeln, der Fadenholer sowie der Knüper miteinander gekuppelt sind und sich im Bewegungsbereich der gebogenen Hohlnadeln Auflagetische für die mit geknoteten Auf hängeschlaufen zu versehenen Bearbeitungsstücke befinden. Bei den bekannten Schlaufenmaschinen sind die Auflagetische schwenkbar angeordnet. Nach einem neueren Vorschlag können die Auflagetische auch feststehend angebracht sein.

Nachdem die Bearbeitungsstücke mit geknoteten Aufhängeschlaufen versehen sind ist es üblich, daß die Bedienungspersonen diese von Hand erfassen, welche in einer Fleischwarenfabrik beispielsweise durchaus 15 kg wiegen können, und mit ihren Aufhängeschlaufen in die Haken einer endlos umlaufenden Transporteinrichtung einhängen, welche in einer Ebene oberhalb der Schlaufenmaschinen vorgesehen ist.

Diese Art der Übergabe der Bearbeitungsstücke an die Transporteinrichtung ist nicht nur anstrengend, sondern auch gefährlich, da durch die Übergabe von Hand auf die Haken der Transporteinrichtung die Gefahr von Verletzungen besteht. Außerdem erweist sich diese Art der Übergabe in zeitlicher Hinsicht als vergleichsweise aufwendig, ganz abgesehen davon, daß auch nur immer ein Bearbeitungsstücke auf die einzelnen Haken der endlos umlaufenden Transporteinrichtung aufgehängt werden können.

Von diesem Stand der Technik ausgehend liegt der Erfindung die Aufgabe zugrunde, unter Vermeidung vorerwähnten Nachteile eine gattungsgemäße Vorrichtung zu schaffen, welche in einfacher und schneller Weise eine selbsttätige Übergabe von mit geknoteten Aufhängeschlaufen versehenen Bearbeitungsstücken auf die Haken einer Transporteinrichtung völlig gefahrlos ermöglicht.

Erfindungsgemäß wird dies dadurch erreicht, daß der Schlaufenmaschine benachbart ein Drehkreuz od.dgl. zugeordnet ist, daß die Schlaufenmaschine mit einem Schlaufenführungsstab mit dem Drehkreuz od.dgl. in loser Verbindung steht, daß der Schlaufenführungsstab sich vom Einsteckbereich der Fadeneinziehnadel der Schlaufenmaschine bis in den Endbereich in der Übergabeposition des jeweils vorstehenden Armes des Drehkreuzes od.dgl. oberhalb derselben erstreckt, daß dem Mittenbereich des Drehkreuzes od.dgl. das eine Ende eines schräg aufwärts gerichteten Abschnittes einer mit Haken ausgerüsteten, endlos umlaufenden Fördereinrichtung zugeordnet ist, dessen anderes Ende mit der Transporteinrichtung in Übergabeverbindung steht und daß der schräg aufwärts gerichtete Abschnitt der Fördereinrichtung in Längsrichtung des sich jeweils in der Abgabeposition befindlichen Armes des Drehkreuzes od.dgl. verläuft. Durch diese Ausgestaltung wird erreicht, daß die geknoteten Aufhängeschlaufen der einzelnen Bearbeitungsstücke durch deren Weiterbewegung zwangsläufig über den Schlaufenführungsstab auf einen in der Übergabeposition vorstehenden Arm des Drehkreuzes od.dgl. übergeleitet werden, so daß eine Vielzahl von Aufhängeschlaufen aufgeschoben werden kann, da die Bearbeitungsstücke von diesen nach unten hängen.

Sobald die gewünschte Anzahl aufgeschoben ist, wird das Drehkreuz od.dgl. um vorzugsweise 90 Grad gedreht, so daß ein anderer Arm u.a. auch in der Abgabeposition vorsteht, in welcher die einzelnen Aufhängeschlaufen von einem Haken des schräg aufwärts gerichteten Abschnittes der Fördereinrichtung erfaßt werden, welcher zwischen die nach außen hin offenen Schenkel des Armes eingreift und somit die Aufhängeschlaufen erfaßt und die daran hängenden Bearbeitungsstücke zwangsläufig nach oben abtransportiert. Die Bedienungsperson der Schlaufenmaschine ist somit von der Weitergabe der mit geknoteten Aufhängeschlaufen ver sehenen Bearbeitungsstücken befreit, da diese völlig selbsttätig abläuft.

Vorteilhaft weist der Schlaufenführungsstab an seinem einen Ende eine sich verbreiternde Platte auf, welche in ihrer Breite der der Arme des Drehkreuzes od.dgl. angepaßt ist. Durch diese sich verbreiternde Platte wird eine Spreizung der Aufhängeschlaufen erreicht, so daß diese über die freien Ende der Arme hinübergeführt werden und an diesen unter dem Eigengewicht der daran befindlichen Bearbeitungsstücke abwärts rutschen, bis die gewünschte Stückzahl sich auf einem Arm befindet.

Gemäß einem weiteren Merkmal der Erfindung bestehen die Arme des Drehkreuzes od.dgl. aus U-förmigen Bügeln, deren Stege im Mittenbereich des Drehkreuzes od.dgl. angeordnet sind und deren Schenkel sich schräg aufwärts nach außen erstrecken. Durch diese Ausgestaltung ist es möglich, daß die Aufhängehaken auf dem schräg aufwärts gerichteten Abschnitt der Fördereinrichtung zwischen die Schenkel eingreifen und die gespreizt über die Schenkel geschobenen Aufhängeschlaufen erfassen können und die daran befindlichen Bearbeitungsstücke aufwärts abtransportiert werden.

Der schräg aufwärts gerichtete Abschnitt der Fördereinrichtung geht nach einem weiteren Vorschlage der Erfindung in einen etwa horizontal verlaufenden, sich über das Drehkreuz od.dgl. zur anderen Seite hinweg erstreckenden Abschnitt über, welcher mit einem Magazin für die Transporthaken in Verbindung steht. In das Magazin kehren die Haken der Transporteinrichtung zurück, nachdem diese von den daran hängenden Bearbeitungsstücken entleert sind, so daß diese wieder in den Förderkreislauf eingereiht werden.

Die Fördereinrichtung ist als ein Teil in die Transporteinrichtung integriert, so daß sich ein insgesamt geschlossener Umlauf für die Transporthaken unter Einbeziehung des Drehkreuzes ergibt.

Das.Führungsorgan der Fördereinrichtung ist in deren etwa horizontal verlaufenden Abschnitt geteilt ausgebildet. Der dem Drehkreuz od.dgl. zugewandte Teil des Führungsorgans der Fördereinrichtung ist gegenüber dem diesem abgewandten Teil heb- und senkbar gestaltet, so daß dessen Ende in angehobener Position einen Anschlag für die im Magazin befindlichen Transporthaken bildet mit der Folge, daß immer nur ein Transporthaken auf diesen Teil nachrutschen kann, und zwar durch Absenken dieses Teils, woraufhin durch Anheben dann wieder der Anschlag wirksam wird und das Nachrutschen weiterer vorstehender Transporthaken verhindert.

Als Transporteinrichtung und oder als Fördereinrichtung finden vorzugsweise Rohrbahnen Verwendung, deren Rohre die Führungsorgane für die Transporthaken bilden und denen jeweils ein oder mehrere endlos umlaufende Zugorgane, wie z.B. Ketten, Seile od.dgl., als Förderorgane zugeordnet sind.

Ein Ausführungsbeispiel der Erfindung ist an Hand der zeichnung näher erläutert, und zwar zeigt:

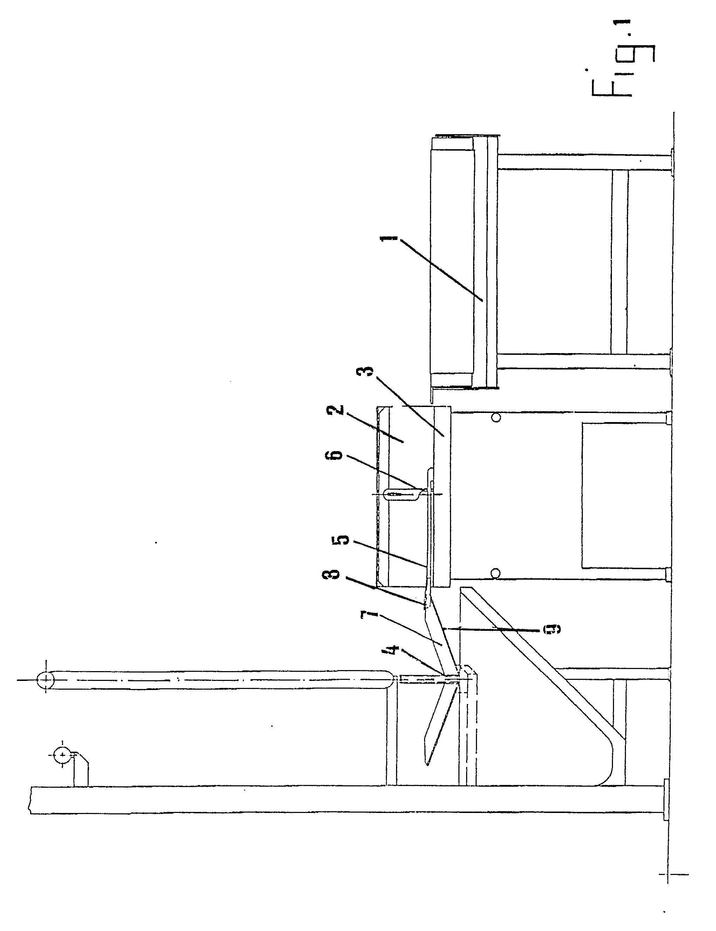

Fig. 1 eine Vorderansicht der erfindungsgemäßen Vorrichtung und

Fig. 2 eine Seitenansicht der Fig. 1.

Mit 1 ist das Zerlegeband oder ein Rundtisch einer Fleischwarenfabrik bezeichnet, neben dem die Schlaufenmaschine 2 angeordnet ist. Der feststehende Auflagetisch der Schlaufenmaschine 2 ist mit 3 bezeichnet.

Der Schlaufenmaschine 2 benachbart ist das Drehkreuz 4 zugeordnet. Die Schlaufenmaschine 2 steht mit einem Schlaufenführungsstab 5 in loser Verbindung. Der Schlaufenführungsstab 5 erstreckt sich vom Einstichbereich der Fadeneinziehnadel 6 der Schlaufenmaschine 2 bis in den Endbereich des in der Übergabeposition jeweils vorstehenden Armes 7 des Drehkreuzes 3 oberhalb desselben.

Der Schlaufenführungsstab 5 weist an seinem Ende eine sich verbreiternde Platte 8 auf, welche in ihrer Breite der der Arme 7 des Drehkreuzes 4 angepaßt ist.

Die Arme 7 des Drehkreuzes 4 bestehen aus U-förmigen Bügeln, deren Stege im Mittenbereich des Drehkreuzes 4 angeordnet sind, während deren Schenkel 9 sich schräg aufwärts frei nach außen erstrecken.

Dem Mittenbereich des Drehkreuzes 4 ist das eine Ende eines schräg aufwärts gerichteten Abschnittes 10 einer mit Haken 11 ausgerüsteten, endlos umlaufenden Fördereinrichtung 12 zugeordnet, dessen anderes Ende mit der oberhalb der Schlaufenmaschine 2 verlaufenden Transporteinrichtung 13 in Übergabeverbindung steht, was aus Platzgründen nicht dargestellt ist.

Der schräg aufwärts gerichtete Abschnitt 10 der Fördereinrichtung 12 verläuft in Längsrichtung des sich jeweils in der Abgabeposition befindlichen Armes 7 des Drehkreuzes und steht mit der oberhalb der Schlaufenmaschine verlaufenden Transporteinrichtung 13 in Übergabeverbindung.

Durch die Verbreiterung durch die Platte 8 am Ende des Schlaufenführungsstabes 5 wird erreicht. daß die über diesen rutschenden. geknoteten Aufhängeschlaufen gespreizt und über die beiden Schenkel 9 der Arme 7 geschoben werden, so daß sie an diesen abwärts rutschen unter der Einwirkung des Gewichtes der daran hängenden Bearbeitungsstücke.

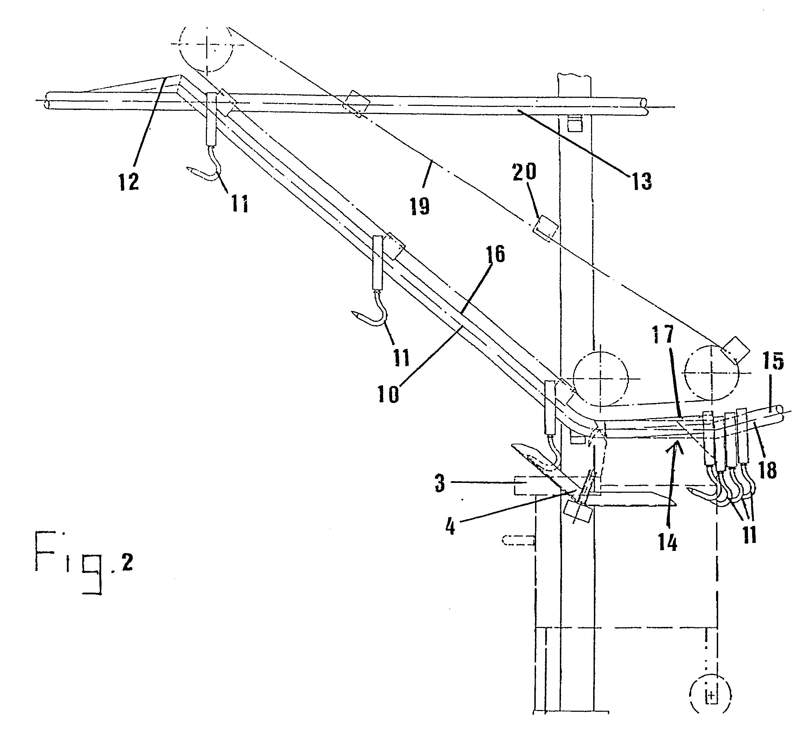

Der schräg aufwärts gerichtete Abschnitt 10 der Fördereinrichtung 12 geht in einen etwa horizontal verlaufenden, sich über das Drehkreuz 4 zur anderen Seite hinweg erstreckenden Abschnitt 14 über. welcher mit einem Magazin 15 für die Transporthaken 11 in Verbindung steht. Das Führungsorgan 16 der Fördereinrichtung 12 ist in deren etwa horizontal verlaufenden Abschnitt 14 geteilt ausgebildet. und zwar derart, daß der dem Drehkreuz 4 zugewandte Teil 17 gegenüber dem diesem abgewandten Teil 18 heb- und senkbar gestaltet ist. Hierdurch wird erreicht, daß in der angehobenen Stellung, wie aus Fig. 2 ersichtlich, das Ende des Teils 17 einen Anschlag für die vorstehenden Transporthaken 11 bildet und in der abgesenkten Stellung ein Transporthaken auf diesen gelangen kann, woraufhin dann wieder das Anheben erfolgt, so daß nur ein Transporthaken sich in der Warteposition befindet.

Sowohl als Fördereinrichtung 12 als auch als Transporteinrichtung 13 finden an sich bekannte Rohrbahnen Verwendung, welche im dargestellten Ausführungsbeispiel zu einer Einheit verbunden sind. Die Rohre bilden die Führungsorgane 16 für die Transporthaken 11. Die Bewegung der Transporthaken 11 geschieht mittels endlos umlaufender Zugorgane 19 in Form von Ketten, Seilen od.dgl. Diese sind mit Mitnehmern 20 besetzt, welche in ihrem Umlauf die oberen Enden der Transporthaken 11 im Magazin 15 erfassen und über das Führungsorgan 16 durch das Drehkreuz 4 hindurch in den schräg aufwärts gerichteten Abschnitt 10 vorschieben.

Die Wirkungsweise der erfindungsgemäßen Vorrichtung ist wie folgt:

Nachdem die einzelnen Bearbeitungsstücke auf dem Auflagetisch der Schlaufenmaschine 2 mit geknoteten Aufhängeschlaufen versehen sind, gelangen die Aufhängeschlaufen über den Schlaufenführungsstab nach links, wobei die Bearbeitungsstücke von der Bedienungsperson der Schlaufenmaschine 2 von Hand entsprechend verschoben werden. An dem durch die Platte 8 verbreiterten Ende des Schlaufenführungsstabes 5 werden die Aufhägeschlaufen gespreizt, so daß diese zwangsläufig über die beiden frei vorragenden Schenkel 9 des vorstehenden Armes 7 des Drehkreuzes geschoben werden. Unter dem Gewicht der daran hängenden Bearbeitungsstücke gleiten die Aufhängeschlaufen an dem Arm 7 schräg abwärts, bis eine gewünschte Anzahl sich auf diesem befindet.

Nunmehr erfolgt eine Drehbewegung des Drehkreuzes 4 um einen bestimmten Winkel, beispielsweise bei vier Armen 7 des Drehkreuzes, um einen Winkel von 90 Grad oder einen entsprechenden Winkel je nach der Anzahl der vorhandenen Arme. Dadurch gelangt sowohl ein entleerter Arm in die Übergabeposition als auch ein mit Bearbeitungsstücken beladener neuer Arm 7 in die Abgabeposition des Drehkreuzes 4.

Wie aus Fig. 2 ersichtlich, werden die auf dem Arm 7 in der Abgabeposition befindlichen Aufhängeschlaufen von einem Transporthaken 7 unterfaßt, welcher über den Mitnehmer 20 auf dem schräg aufwärts gerichteten Abschnitt 10 der Fördereinrichtung 12 aufwärts geschoben wird. Der Aufhägehaken erfaßt hierbei die gespreizten Aufhängeschlaufen und transportiert diese mit den daran hängenden Bearbeitungsstücken aufwärts, wobei diese infolge der Integrierung der Fördereinrichtung 12 in die Transporteinrichtung 13 auf diese übergeleitet und zum Bestimmungsort transportiert werden. Nach Entnahme der Bearbeitungsstücke kehren die leeren Transporthaken 11 über die Transporteinrichtung 13 in das Hakenmagazin 15 zurück, woraufhin diese wieder in den Übernahmeprozeß eingegliedert werden.

Es ist auch möglich, vorgefertigte längere Aufhängeschlaufen zu benutzen und diese auf die Haken aufzuhängen, so daß die Bearbeitungsstücke unterschiedliche Höhen zueinander aufweisen, so daß auf einen Transporthaken eine vergleichsweise große Anzahl von Bearbeitungsstücken aufgebracht werden kann.

## Ansprüche

1. Vorrichtung zur selbsttätigen Übergabe von in einer Schlaufenmaschine mit einem feststehenden Auflagetisch mit geknoteten Aufhängeschlaufen versehen Bearbeitungsstücken, vorzugsweise Fleischstücken, mit ihren Aufhängeschlaufen auf die Haken einer endlos umlaufenden Transporteinrichtung, dadurch gekennzeichnet, daß der Schlaufenmaschine (2) benachbart ein Drehkreuz (4) od.dgl. zugeordnet ist, daß die Schlaufenmaschine (2) mit einem Schlaufenführungsstab (5) mit Drehkreuz (4) od.dgl. in loser Verbindung steht, daß der Schlaufenführungsstab (5) sich vom Einstichbereich der Fadeneinziehnadel (6) der Schlaufenmaschine (2) bis in den Endbereich des in der Übergabeposition jeweils vorstehenden Armes (7) des Drehkreuzes (4) od.dgl. oberhalb desselben erstreckt, daß dem Mittenbereich des Drehkreuzes (4) od.dgl. das eine Ende eines schräg aufwärts gerichteten Abschnittes (10) einer mit Haken (11) ausgerüsteten, endlos umlaufenden Fördereinrichtung (12) zugeordnet ist, dessen anderes Ende mit der Transporteinrichtung (13) in Übergabeverbindung steht und daß der schräg aufwärts gerichtete Abschnitt (10) der Fördereinrichtung (12) in Längsrichtung des sich jeweils in der Abgabeposition befindlichen Armes (7) des Drehkreuzes (4) od.dgl. verläuft.

2. Vorrichtung nach Anspruch 1, dadurch gekennzeichnet, daß der Schlaufenführungsstab (5) an seinem dem Drehtisch (4) od.dgl. zugewandten Ende eine sich verbreiternde Platte (8) aufweist, welche in ihrer Breite der der Arme (7) des Drehkreuzes (4) od.dgl. angepaßt ist.

3. Vorrichtung nach Anspruch 1 oder 2, dadurch gekennzeichnet, daß die Arme (7) des Drehkreuzes (4) od.dgl. aus U-förmigen Bügeln bestehen, deren Stege im Mittenbereich des Drehkreuzes (4) od.dgl. angeordnet sind und deren Schenkel (9) sich schräg aufwärts nach außen erstrecken.

4. Vorrichtung nach einem der vorhergehenden, dadurch gekennzeichnet, daß der schräg aufwärts gerichtete Abschnitt (10) der Fördereinrichtung (12) in einen etwa horizontal verlaufenden, sich über das Drehkreuz (4) od.dgl. zur anderen Seite hinweg erstreckenden Abschnitt (14) übergeht, welcher mit einem Magazin (15) für die Transporthaken (11) in Verbindung steht.

5. Vorrichtung nach einem der vorhergehenden, dadurch gekennzeichnet, daß die Fördereinrichtung (12) als ein Teil in die Transporteinrichtung (13) integriert ist.

6. Vorrichtung nach einem der vorhergehenden, dadurch gekennzeichnet, daß das Führungsorgan (16) der Fördereinrichtung (12) in deren etwa horizontal verlaufenden Abschnitt (14) geteilt ausgebildet ist.

7. Vorrichtung nach einem der vorhergehenden, dadurch gekennzeichnet, daß der dem Drehkreuz (4) od.dgl. zugewandte Teil (17) des Führungsorgans (16) der Födereinrichtung (12) gegenüber dem diesem abgewandten Teil (18) heb- und senkbar ausgeführt ist.

8. Vorrichtung nach einem der vorhergehenden, dadurch gekennzeichnet, daß als Transporteinrichtung (13) und/oder als Fördereinrichtung (12) Rohrbahnen Verwendung finden, deren Rohre die Führungsorgane (16) für die Transporthaken (11) bilden und denen eine oder mehrere endlos umlaufende Zugorgane (19) als Förderorgane zugeordnet sind.

EP 0 374 581 A1

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 535 297 (LARSEN) <br> * Zusammenfassung; Figur 1 * <br> --- | 1,5 | B 65 G 47/61 <br> B 65 G 19/02 <br> A 22 B 7/00 |
| A | DE-U-8 707 554 (VOGT-WERKE) <br> * Seite 6, Zeilen 19-26; Figur 1 * <br> --- | 1,8 | |
| A | DE-A-3 148 924 (LUGTIGHEID) <br> * Zusammenfassung; Figur 1 * <br> --- | 1 | |
| A | DE-C- 467 624 (DEMAG) <br> * Zeilen 57-72; Figuren 1-3 * <br> --- | 1 | |
| A | EP-A-0 261 471 (FRANZ XAVER BAYER) <br> * Spalte 16, Zeile 25 - Spalte 18, Zeile 45; Figuren 6-8 * <br> ----- | 4,7 | |
| | | | RECHERCHIERTE SACHGEBIETE (Int. Cl.5) <br><br> B 65 G <br> A 22 B <br> A 22 C |

Der vorliegende Recherchenbericht wurde für alle Patentansprüche erstellt

| Recherchenort | Abschlußdatum der Recherche | Prüfer |
|---|---|---|
| DEN HAAG | 20-03-1990 | NEVILLE D.J. |